# EUROPÄISCHE PATENTSCHRIFT

(11) **EP 2 652 026 B1**
(45) Veröffentlichungstag und Bekanntmachung des Hinweises auf die Patenterteilung: **02.08.2017**
(21) Anmeldenummer: 11794516.2
(22) Anmeldetag: 15.12.2011
(51) Int. Cl.: C08K 5/00, C08K 3/00

(54) **POLYMER-ZUSAMMENSETZUNG MIT WÄRME-ABSORBIERENDEN EIGENSCHAFTEN UND HOHER STABILITÄT GEGEN BEWITTERUNG**
POLYMER COMPOSITION HAVING HEAT-ABSORBING PROPERTIES AND HIGH RESISTANCE TO WEATHERING
COMPOSITION POLYMÈRE À PROPRIÉTÉS D'ABSORPTION DE LA CHALEUR ET STABILITÉ ÉLEVÉE AUX INTEMPÉRIES

(30) Priorität: 17.12.2010 IT RM20100667
(43) Veröffentlichungstag der Anmeldung: 23.10.2013
(73) Patentinhaber: Covestro Deutschland AG, 51373 Leverkusen (DE)
(72) Erfinder: MEYER, Alexander, 40489 Düsseldorf (DE); STOLLWERCK, Gunther, 47802 Krefeld (DE); REICHENAUER, Joerg, 47802 Krefeld (DE)
(74) Vertreter: Levpat
(86) Internationale Anmeldenummer: PCT/EP2011/072909
(87) Internationale Veröffentlichungsnummer: WO 2012/080395

(56) Entgegenhaltungen:
- WO-A1-2011/141369
- US-A- 5 116 706
- US-A- 5 952 096
- US-A1- 2007 015 081
- US-A1- 2009 136 730
- US-A1- 2010 242 792
- DATABASE CA [Online] CHEMICAL ABSTRACTS SERVICE, COLUMBUS, OHIO, US; 21. Juli 2007 (2007-07-21), KOBRAKOV, K. I. ET AL: "Method for production of heat-resistant perinone dyes", XP002638194, gefunden im STN Database accession no. 2007:821326 & RU 2 303 614 C1 (GOU VPO "MOSKOVSKII GOSUDARSTVENNYI TEKSTIL'NYI UNIVERSITET IM. A. N.) 27. Juli 2007 (2007-07-27)
- DATABASE WPI Week 200841 Thomson Scientific, London, GB; AN 2008-G43198 XP002638196, -& JP 2007 334097 A (MITA IND CO LTD) 27. Dezember 2007 (2007-12-27)
- MANUKIAN, B. K.: "247. Über Pyromellitsäure- und Cumidinsäure-Derivate. Einige Benzimidazole aus Pyromellitsäure-dianhydrid", HELVETICA CHIMICA ACTA , 47(8), 2211-17 CODEN: HCACAV; ISSN: 0018-019X, Bd. 47, Nr. 8, 1964, Seiten 2211-2217, XP002638195,

## Beschreibung

Die Erfindung betrifft eine Infrarotstrahlung-(IR)-absorbierende Polymer-Zusammensetzung enthaltend einen transparenten thermoplastischen Kunststoff, einen anorganischen Infrarotabsorber, nachfolgend auch als IR-Absorber bezeichnet, mindestens ein anorganisches nanoskaliges Pigment und die Kombination von mindestens zwei organischen Farbmitteln spezieller Struktur sowie die Herstellung und Verwendung der erfindungsgemäßen Polymer-Zusammensetzungen und die daraus hergestellten Erzeugnisse.

Insbesondere betrifft die vorliegende Erfindung Zusammensetzungen, welche eine hohe Stabilität - insbesondere auch eine hohe Farbstabilität - gegen Bewitterung sowohl im sichtbaren als auch im IR-Bereich aufweisen.

Die Erfindung betrifft ferner die Verwendung der erfindungsgemäßen Polymer-Zusammensetzung enthaltend diese IR-Absorber und Farbmittelkombinationen zur Herstellung von Scheiben für den Einsatz in Gebäuden, Kraftfahrzeugen und Schienen- oder Luftfahrzeugen.

Verscheibungen aus Zusammensetzungen, enthaltend transparente thermoplastische Polymere wie z.B. Polycarbonat, bieten für den Einsatz im Fahrzeugbereich und für Gebäude viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, daß die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den IR-Bereich zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im IR möglichst minimiert werden. Übliche transparente thermoplastische Polymere wie z.B. Polycarbonat sind jedoch sowohl im sichtbaren Bereich, als auch im IR transparent.

Es werden daher z.B. Zusätze benötigt, welche im IR eine möglichst geringe Transparenz aufweisen ohne die Transparenz im sichtbaren Bereich des Spektrums nachteilig zu beeinflussen.

Unter den transparenten thermoplastischen Kunststoffen sind zum Beispiel Polymere basierend auf Polycarbonat und Polymethylmethacrylat (PMMA) besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Infrarot-absorbierende Eigenschaften zu verleihen werden daher entsprechende Infrarotabsorber als Additive eingesetzt. Insbesondere sind hierfür IR-Absorber-Systeme interessant, die über ein breites Absorptionsspektrum im IR-Bereich (Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei Ihrer Verarbeitung Temperaturen bis zu 350°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann.

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, feinteiliger Wolframate oder Materialien auf Basis von Antimon-dotiertem Zinnoxid (ATO) oder Indium-Zinn-Oxid (ITO) sich als effiziente IR-Absorber erwiesen, da sie über eine relativ breite Absorptionsbande im IR-Bereich verfügen.

Allerdings decken IR-Absorber - auch wenn sie eine breite Absorptionsbande im IR-Bereich aufweisen - nicht den vollständigen IR-Bereich ab. Ferner weisen sie keine oder nur geringe Absorption im sichtbaren Bereich auf. Zudem werden ca. 50 % der durch eine Scheibe in ein Gebäude oder ein Fahrzeug eingetragene Energie durch Strahlung im sichtbaren Bereich des Spektrums (400 nm - 750 nm) verursacht. Deshalb müssen neben IR-Absorbern auch andere Pigmente und/oder Farbstoffe, die im sichtbaren Bereich des Lichts absorbieren, eingesetzt werden, um eine niedrige Gesamtenergietransmission sicherzustellen.

Scheiben, welche im Transport- bzw. Infrastrukturbereich eingesetzt werden, müssen zudem eine lange Lebensdauer aufweisen und dürfen während dieser nicht verspröden. Darüber hinaus sollen sich Farbe und Transparenz über die Lebensdauer nicht oder nur geringfügig verändern, ebenso wie die IR-Eigenschaften, d.h. der Schutz vor Wärmestrahlung. Ferner muss die Scheibe über eine ausreichende Kratzfestigkeit verfügen.

Aufgrund der hohen geforderten Lebensdauer wird als Verscheibungsmaterial häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente und IR-Absorber anorganische Oxide, wie z.B. Eisenoxid, eingesetzt werden, verändern sich die IR- und Farbeigenschaften auch über lange Zeiträume praktisch nicht. Die Verwendung dieser Pigmente in thermoplastischen Materialien ist allerdings nicht möglich, da sie zu Trübung und/oder Abbau der entsprechenden Matrix führt.

Aufgrund der oben geschilderten Vorteile von Kunststoffen besteht daher der Bedarf an Materialien, die sowohl die guten physikalischen Eigenschaften von Thermoplasten als auch die hohe Farb- und IR-Stabilität entsprechend eingefärbter Gläser aufweisen.

Um die Langlebigkeit von thermoplastischen Materialien zu verbessern, ist bekannt diese mit UV-Schutz und/oder Kratzfestbeschichtungen zu versehen. Darüber hinaus ist eine große Anzahl von Farbmitteln bekannt, die eine hohe Lichtechtheit aufweisen. Anorganische IR-Absorber sind den organischen IR-Absorbern vorzuziehen, da sie über eine höhere Stabilität verfügen.

Es zeigte sich allerdings, dass die im Stand der Technik genannten thermoplastischen Zusammensetzungen nur unzureichend geeignet sind, wenn außerordentlich hohe Farb- und IR-Stabilität erforderlich sind. Dies ist z.B. der Fall, wenn Glasscheiben und Scheiben aus thermoplastischen Material zusammen verbaut werden. Hier zeigt sich, dass die Farb- und IR-Stabilität von Glas gegenüber dem thermoplastischen Material überlegen ist. Farbabweichungen fallen insbesondere dann auf, wenn diese Materialien nebeneinander verbaut werden.

Relativ neu ist die Forderung, dass der direkte solare Transmissionsgrad "Direct Solar Energy Transmitted to the inside of a Glazing" nachfolgend auch als "Solar Direct Transmittance" bezeichnet (T_{DS} gemessen nach ISO 13837) bzw. der Gesamtenergietransmissionsgrad "Total Solar Energy Transmitted to the Inside of a Glazing" nachfolgend auch als "Solar Total Transmittance" bezeichnet (T_{TS}, gemessen nach ISO 13837) einer Scheibe bestimmte Werte erreichen muss und dass diese Werte sich über die Lebensdauer einer Scheibe nicht wesentlich verändern dürfen. Derartige Forderungen werden aufgrund des Klimaschutzes zukünftig vermehrt gestellt werden.

Das Ausbleichen von Farbmitteln führt nicht nur zur Veränderung der Farbeigenschaften sondern führt auch dazu, dass eine höhere Energietransmission auftritt. Dies wiederum bedeutet, dass die geforderten Transmissionswerte nicht mehr eingehalten werden können. Eine Veränderung im IR-Bereich ist optisch eher unauffällig jedoch kann diese Veränderung ebenfalls zur Veränderung der Leistungsdaten bezüglich des T_{DS} -Werts bzw. des T_{TS} - Werts führen. Die damit verbundene erhöhte Wärmezufuhr in das Gebäude oder den Innenraum des Fahrzeugs ist unerwünscht, da die Leistung der Klimatisierung erhöht werden muss.

Ferner ist es erforderlich die Farbgebung des Formkörpers in einer neutralen Farbe zu gestalten, da häufig die Atmosphäre des Innraums bzw. der Inneneinrichtung durch eine intensiv gefärbte Scheibe beeinflußt wird. In der Regel wird ein farbneutrales grau bevorzugt. In bestimmten Ausführungsformen kann die Farbgebung hin zu einem blau-grau, einem grün-grau, rot-grau oder gelb-grau verändert werden.

Die Zusammensetzung muss unter den für Thermoplaste üblichen Temperaturen verarbeitbar sein, ohne das sich bei der Verarbeitung die Farbe oder die Leistungsdaten deutlich verändern.

Zusammensetzungen auf Basis von Polycarbonat enthaltend anorganische IR-Absorber auf Borid- und/oder Wolframatbasis sind in verschiedenen Publikationen beschrieben worden.

Aus der WO 2007/008476 A1 sind Formmassen bekannt, die insbesondere für Brillen geeignet sind und die IR-Absorber auf Borid-Basis und spezielle Ruße enthalten, wobei durch die Kombination dieser Komponenten ein synergistischer Effekt hinsichtlich der IR-absorbierenden Eigenschaften erzielt werden soll. Diese Anmeldung macht jedoch keine Angaben zur Bewitterungsstabilität und zur Stabilität der Farbmittel.

Die JP 2005-047179, JP 2005344006, JP2006249345, EP 1865027 A1, JP07033969, JP 2008214596 und EP2009057 A1 erwähnen Zusammensetzungen enthaltend IR-Absorber auf Boridbasis in Kombination mit bestimmten Farbmitteln auf Anthrachinonbasis. Jedoch werden keine stabilen Farbstoffkombination im Sinne der vorliegenden Erfindung offenbart.

JP 2006-307172 und JP 2007-169503 beschreiben Zusammensetzungen enthaltend anorganische IR-Absorber und diverse Farbstoffe aus der Gruppe der Anthrachinone, Phthalocyanine oder Perinone, wobei keinerlei Aussage über die Bewitterungsstabilität der Farbstoffe bzw. bestimmter Farbstoffkombinationen gemacht wird.

JP 2008-156386 offenbart Indanthren-Farbmittel in IR-Absorberhaltigen Zusammensetzungen.

US 6476158 beschreibt gedeckte, d.h. nicht transparente Polycarbonat-Polyester Zusammensetzungen, welche eine besonders hohe Witterungsstabilität und Erhalt des Oberflächenglanzes aufweisen. Transparente zusammensetzungen wie in der vorliegenden Erfindung werden jedoch nicht beschrieben.

In keinem der zuvor genannten Dokumente werden Bewitterungseigenschaften der Zusammensetzungen, die erfindungsgemäßen Farbmittelkombinationen, oder die Farb- und IR-Stabilität beschrieben und somit auch keine Lösung für das der vorliegenden Erfindung zugrundeliegende Problem nahegelegt.

Im Stand der Technik sind viele Farbstoffe als besonders lichtecht und somit auch als stabil beschrieben worden. Die Lichtechtheit (ermittelt bei 1/3 Richttyptiefe mit 1% TiO₂ (PS 2% TiO₂ in Anlehnung an DIN EN ISO 4892-2; transparente Färbungen mit 0,05% Farbstoff; beurteilt nach 8stufigem Blaumaßstab) der sogenannten Macrolex-Farbstoffe (Lanxess Datenblätter; Technische Information, Lanxess Deutschland GmbH, Functional Chemicals, High Performance Additives, Colorants, 51369 Leverkusen, Deutschland) wie z.B. die Farbstoffe Macrolex® Blau RR (Solvent Blue 97), Macrolex® Violett 3R (Solvent Violet 36), die für die Verwendung in Polycarbonat vorgesehen sind, sind mit 7-8 (8 = Höchstwert) eingestuft worden. Dennoch zeigte sich im Rahmen der vorliegenden Versuche, daß formal als lichtecht eingestufte Farbmittel in Polycarbonatzusammensetzungen nicht die erfindungsgemäße Stabilität bei Bewitterung aufweisen.

Vielmehr zeigte sich, dass sich nur eine sehr geringe Anzahl an Farbmitteln spezieller Struktur eignet und dies auch nur in einer sehr speziellen eingeschränkten Kombination um die vorliegende Aufgabe zu lösen. Ferner zeigte sich, dass dies auch nur in Kombination mit speziellen anorganischen Pigmenten und speziellen anorganischen IR-Absorbern möglich ist.

Es bestand daher die Aufgabe eine Zusammensetzung auf Basis eines thermoplastischen Materials zur Verfügung zu stellen, welches eine hohe IR-Performance in Kombination mit guten Transmissionseigenschaften im sichtbaren Bereich und einer hohen Farb- und Bewitterungsstabilität aufweist. Diese Kennwerte sollen sich dabei über die Lebensdauer nur geringfügig verändern.

Weiterhin sollte die erfindungsgemäße Zusammensetzung keine oder nur eine geringe Trübung aufweisen.

Ferner war es die Aufgabe der vorliegenden Erfindung, Zusammensetzungen zur Herstellung von Mehrschichtartikeln und Formteilen zur Verfügung zu stellen.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen. Transparente thermoplastischen Polymere beziehungsweise die thermoplastischen Polymer-Zusammensetzungen im Sinne der vorliegenden Erfindung weisen ferner eine Anfangstrübung vor Bewitterung von weniger als 5,0 %, bevorzugt 4,0 %, weiter bevorzugt weniger als 3,0 %, insbesondere bevorzugt weniger als 2,0 % auf.

Überraschenderweise konnte die Aufgabe durch Zusammensetzungen gemäß Anspruch 1 der vorliegenden Erfindung, die eine Kombination von speziellen Farbmitteln, anorganischen nanoskaligen Pigmenten sowie speziellen IR-Absorbern enthält.

Die erfindungsgemäße Polymerzusammensetzung enthält die Komponenten:
a) einen transparenten thermoplastischen Kunststoff, bevorzugt Polycarbonat, Copolycarbonat, Polyestercarbonat, Polystyrol, Styrol-Copolymere, aromatische Polyester wie Polyethylenterephthalat (PET), P E T-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat, wobei der transparente thermoplastische Kunststoff in einer Menge zugegeben wird, daß diese mit den Komponenten b) bis j) 100 Gew.-% ergibt.
b) einen anorganischen IR Absorber aus der Gruppe der Boridverbindungen vom Typ MxBy (M = La, Ce, Pr, Nd, Tb, Dy, Ho, Y, Sm, Eu, Er, Tm, Yb, Lu, Sr, Ti, Zr, Hf, V, Ta, Cr, Mo, W und Ca; und x und y einer ganzen Zahl von 1 bis 6), wobei Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride bevorzugt sind. Ganz besonders bevorzugt sind Boride auf Basis von Lanthanhexaborid (LaB₆) oder Mischungen enthaltend Lanthanhexaborid.
   Bevorzugt werden die Boride in einer Menge von 0,00150 Gew.-% bis 0,01500 Gew.-%, bevorzugt 0,00180 Gew% bis 0,01100 Gew.-% und besonders bevorzugt 0,00200 Gew% bis 0,00900 Gew.-% berechnet als Feststoffanteil an Borid in der Polymer-Gesamtzusammensetzung eingesetzt. In einer besonderen Ausführungsform werden die Boride in einer Menge von bevorzugt 0,00350 Gew.-% bis 0,00850 Gew.-% und insbesondere bevorzugt 0,00400 Gew.-% bis 0,00800 Gew.% berechnet als Feststoffanteil an Borid in der Polymer-Gesamtzusammensetzung eingesetzt. Feststoffanteil an Borid meint in diesem Zusammenhang das Borid als Reinstoff und nicht eine Suspension oder andere Zubereitung, enthaltend den Reinstoff.
c) mindestens ein anorganisches, nanoskaliges Pigment enthält, vorzugsweise Ruß.
   Der nanoskalige Ruß wird in der erfindungsgemäßen Zusammensetzung bevorzugt in Konzentrationen von 0,00020 Gew.-% bis 0,00350 Gew.-%, insbesondere bevorzugt von 0,00136 Gew.-% bis 0,00300 Gew.-% und ganz besonders bevorzugt in Konzentrationen von 0,001380 Gew.-% bis 0,00280 Gew.-%eingesetzt. In einer besonderen Ausführungsform wird der nanoskalige Ruß bevorzugt in einer Menge von 0,00140 Gew.-% bis 0,00260 Gew.-% insbesondere bevorzugt in einer Menge von 0,00150 Gew.-% bis 0,00250 Gew.-% eingesetzt,
d) mindestens ein Farbmittel ausgewählt aus den folgenden Strukturen 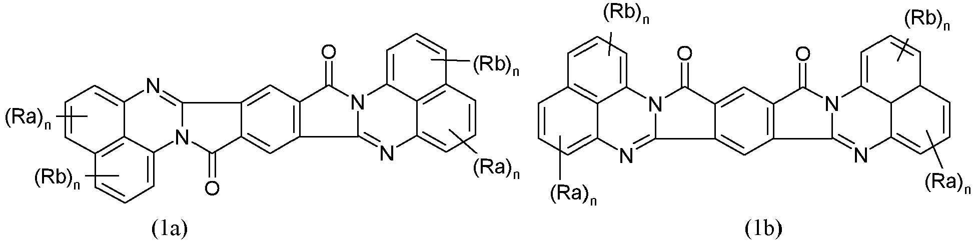 wobei
   - Ra und Rb unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
   - n steht unabhängig vom jeweiligen R für eine natürliche Zahl zwischen 0 und 3, wobei der Rest für n=0 Wasserstoff ist.

   In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta Position zu den Kohlenstoffatomen, welche die Stickstofffunktionalitäten tragen, befinden.
   In einer besonders bevorzugten Ausführungsform ist in allen Ringen n=0, so daß alle Ra und Rb = H sind. 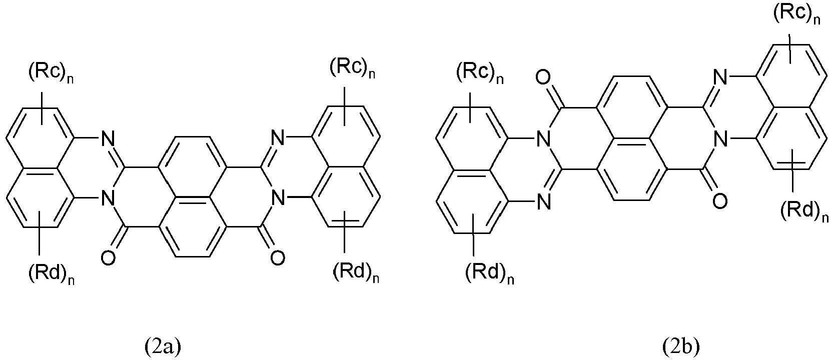 wobei
   - Rc und Rd unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
   - n steht unabhängig vom jeweiligen R für eine natürliche Zahl zwischen 0 und 3, wobei der Rest für n=0 Wasserstoff ist.

   In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-butylrest dar, welcher sich bevorzugt in meta Position zu den Kohlenstoffatomen, welche die Stickstofffunktionalitäten tragen, befinden.
   In einer besonders bevorzugten Ausführungsform ist in allen Ringen n=0, so daß alle Rc und Rd = H sind.
   Die Strukturen (1a) und (1b) bzw. (2a) und (2b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-%) von (1a) und (1b) bzw. (2a) und (2b) eingesetzt.
   Die Herstellung derartiger Farbmittel ist z.B. in DE 2148101 oder WO 2009 074504 A1 beschrieben worden.
   Bevorzugt enthält die erfindungsgemäße Zusammensetzung mindestens ein Farbmittel der Strukturen (1a), (1b), (2a) und (2b), wobei hiervon die Farbmittel der Strukturen (1a) und (1b) besonders bevorzugt sind.
   In einer weiteren Ausführungsform werden die Strukturen (1a), (1b), (2a) und (2b) als jeweils reine Isomere eingesetzt, wobei die reinen Isomere beispielsweise durch präparative HPLC erhalten werden können. 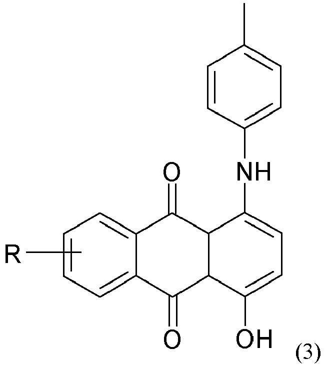
   R ist ausgewählt aus der Gruppe, die aus H und p-Methylphenlyamin-Rest besteht; , bevorzugt ist R=H.
   Derartige Farbmittel sind z.B. unter dem Handelsnamen Macrolex® Violet B von der Firma Lanxess AG erhältlich. In einer besonderen Ausführungsform wird kein Farbmittel der Struktur (3) eingesetzt.
e) mindestens eine Verbindung der folgenden Strukturen: 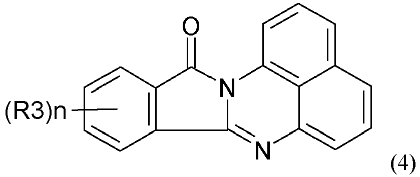 wobei R3 bevorzugt für Halogen, und insbesondere bevorzugt für Cl, steht, wobei besonders bevorzugt n=4 ist. Weiter bevorzugt ist eine Ausführungsform mit n=0, so daß R3 = H sind.
   Derartige Farbmittel sind z.B. unter Macrolex® Orange 3G oder Macrolex® Rot EG bei der Firma Lanxess AG erhältlich.
   Dabei kann, wenn R3 für Cl steht und n = 4 ist, statt dem Farbmittel der Struktur (4) das Farbmittel mit der Struktur (5) eingesetzt werden, um dieselben Farbeigenschaften zu erzielen: 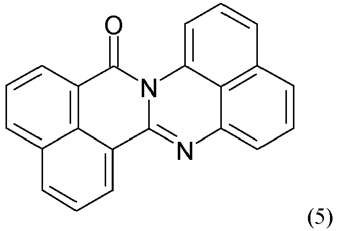
   Derartige Farbmittel sind z.B. unter dem Handelsnamen Macrolex® Rot E2G bei der Firma Lanxess AG erhältlich. 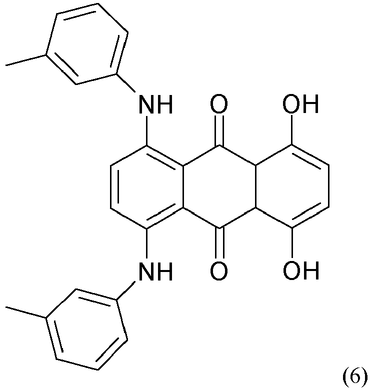
   Derartige Farbmittel sind z.B. unter dem Handelsnamen Macrolex® Grün G bei der Firma Lanxess AG erhältlich. 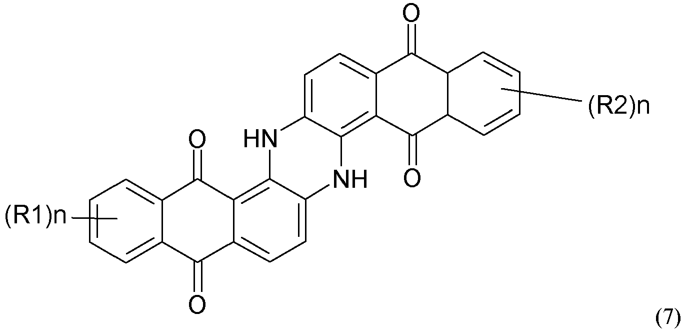 wobei
   - R1 und R2 unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
   - n steht für eine natürliche Zahl zwischen 0 und 4.

   In einer besonders bevorzugten Ausführungsform ist in allen Ringen n=0, so daß alle R1 und R2 = H sind.
   Farbmittel dieser Struktur (7) sind kommerziell erhältlich unter der Paliogen Blau Reihe der BASF AG.
   Bei Verwendung von Farbmitteln der Struktur (7) sind insbesondere die Pigmente bevorzugt, die ein Schüttvolumen (bestimmt nach DIN ISO 787-11) von 2 1/kg - 10 1/kg, bevorzugt 3 1/kg - 8 1/kg, eine spezifische Oberfläche (bestimmt nach DIN 66132) von 5 m²/g - 60 m²/g, bevorzugt 10 m²/g - 55 m²/g, und einen pH-Wert (bestimmt nach DIN ISO 787-9) von 4 - 9 aufweisen. 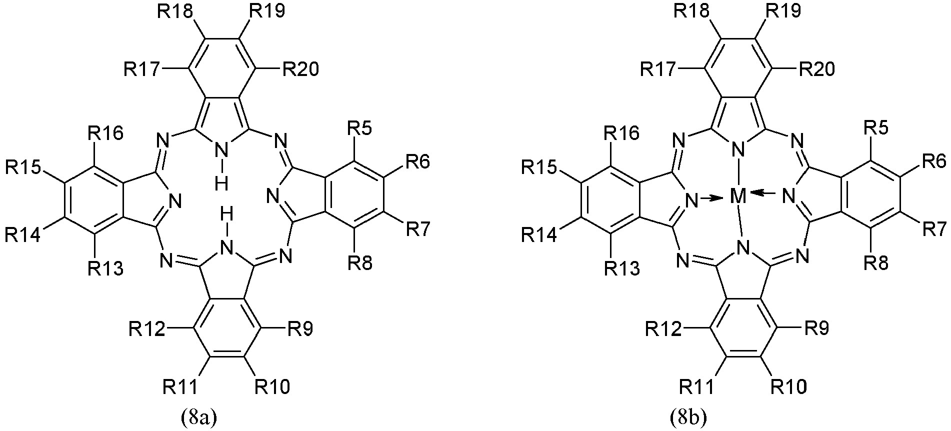
   Die Reste R(5-20) sind jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.
   Bevorzugt ist R(5-20) in allen Positionen gleich. Weiter bevorzugt ist R(5-20) in allen Positionen H. In einer alternativen Ausführungsform ist R(5-20) in allen Positionen Cl.
   M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=C1: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).
   Insbesondere bevorzugt ist die Kombination von M = Cu und R = H für alle Positionen. So ist eine Verbindung der Struktur (8b) mit M=Cu und R(5-20)=H als Heliogen® Blau K 6911D oder Heliogen® Blau K 7104 KW von der BASF AG, Ludwigshafen erhältlich.
   Verbindungen der Struktur (8a) sind z.B. als Heliogen® Blau L 7460 von der BASF AG, Ludwigshafen, erhältlich.
   Von den Strukturen (4), (6), (7) und (8a) bzw. (8b) ist die Verwendung der Strukturen (4), (7) und (8b) insbesondere bevorzugt, wobei wie oben beschrieben, die Struktur (4) durch Struktur (5) unter den beschriebenen Voraussetzungen ersetzt werden kann. Ganz besonders bevorzugt ist die Verwendung von Farbmitteln der Struktur (7).
   Die als Komponenten d) und e) im Rahmen der vorliegenden Erfindung offenbarten Farbmittel können bezogen auf die jeweilige Einzelkomponente in Mengen von 0,00001 Gew.-% bis 0,30000 Gew.-%, bevorzugt von 0,00005 Gew.-% bis 0,10000 Gew.-% und besonders bevorzugt von 0.00010 Gew.-% bis 0,05000 Gew.-% eingesetzt werden.
   In einer bevorzugten Ausführungsform liegen die Farbmittel der Komponente d) zu den Farbmitteln der Komponente e) in einem Verhältnis von 1:3 bis 3:1 vor.
f) optional 0,0 Gew.-% bis 0,5 Gew.-%, bevorzugt 0,038 Gew.-% bis 0,500 Gew.-%, weiter bevorzugt von 0,050 bis 0,250 Gew.-%, besonders bevorzugt von 0,063 bis 0,150 Gew.-%, bezogen auf das Gesamtgewicht der Zusammensetzung, eines weiteren IR-Absorbers, bevorzugt eines weiteren IR-Absorbers auf ITO- und/oder ATO-Basis, besonders bevorzugt auf ATO-Basis.
g) optional 0,0 Gew.-% bis 1,0 Gew.-%, bevorzugt 0,01 Gew.-% bis 0,50 Gew.-%, besonders bevorzugt 0,01 Gew.-% bis 0,40 Gew.-% ein oder mehrere Entformer, bezogen auf die Gesamtmenge an Entformern,
h) optional 0,0 Gew% bis 20,00 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber bezogen auf die Gesamtmenge an UV-Absorbern,
i) optional 0,00 Gew.-%- 0,20 Gew.-%, bevorzugt 0,01 Gew.-% - 0,10 Gew.-%, ein oder mehrere Thermo- bzw. Verarbeitungsstabilisator, bezogen auf die Gesamtmenge an Thermo- bzw. Verarbeitungsstabilisatoren, bevorzugt ausgewählt aus der Gruppe der Phosphine, Phosphite und phenolischen Antioxidantien sowie deren Mischungen. In einer speziellen Ausführungsform der vorliegenden Erfindung werden 0,01 Gew.-% bis 0,05 Gew.-%, bevorzugt 0,015 Gew.-% bis 0,040 Gew.-% an Thermo- bzw. Verarbeitungsstabilisatoren eingesetzt.
j) optional 0,0 Gew.-% bis 5,0 Gew.-%, bevorzugt 0,01 Gew.-% bis 1,00 Gew.-% ein oder mehrere weitere Additiv, bezogen auf die Gesamtmenge an Additiven,

Die obigen Mengenangaben beziehen sich jeweils auf die gesamte Polymerzusammensetzung.

Gegenstand der Erfindung ist ferner ein Verfahren zur Herstellung der erfindungsgemäßen Zusammensetzungen sowie deren Verwendung und daraus hergestellte Erzeugnisse.

Als Farbmittelkombinationen der unter d) und e) genannten Farbmittel sind folgende Kombinationen besonders geeignet (Kommata sind als "und" zu lesen):
I. (1a) und/oder (1b), (4), (2a) und/oder(2b)
II. (1a) und/oder (1b), (5), (2a) und/oder(2b)
III. (1a) und/oder (1b), (7)
IV. (1a) und/oder (1b), (4), (7)
V. (1a) und/oder (1b), (5), (7)
VI. (4), (2a) und/oder(2b)
VII. (5), (2a) und/oder(2b)
VIII. (2a) und/oder(2b), (4), (6)
IX. (2a) und/oder(2b), (5), (6)
X. (3), (4)
XI. (3), (5)
XII. (3), (4), (6)
XIII. (3), (5), (6)
XIV. (3), (4), (7)
XV. (3), (5), (7)
XVI. (3), (4), (2a) und/oder(2b)
XVII. (3), (5), (2a) und/oder(2b)
XVIII. (6), (1a) und/oder (1b)
XIX. (6), (1a) und/oder (1b), (7)
XX. (1a) und/oder (1b), (8).

Dabei werden in diesen besonders geeigneten Farbmittelkombinationen die unter den Komponenten d) und e) als bevorzugt genannten expliziten Farbmittelstrukturen entsprechend bevorzugt eingesetzt.

Die erfindungsgemäßen Zusammensetzungen sind bewitterungsstabil wobei die Farbwerte und der direkte solare Transmissionsgrad ("Solar Direct Transmittance") T_{DS} bzw. der Gesamtenergietransmissiongrad ("Solar Total Transmittance") T_{TS} nur geringe Veränderungen aufweisen.

Die Veränderung der Farbwerte ΔE nach 3000 h künstlicher Bewitterung mit Xenon-Belichtung bei 0,75 W ist kleiner als 3,5, bevorzugt kleiner als 3,0, insbesondere bevorzugt kleiner als 2,5.

Die Veränderung des direkten solaren Transmissionsgrades "Solar Direct Transmittance") ΔT_{DS} nach 3000 h künstlicher Bewitterung mit Xenon-Belichtung bei 0,75 W ist kleiner als 0,90 %, bevorzugt kleiner als 0,80 %, insbesondere bevorzugt kleiner als 0,75 %.

Ferner ist es erforderlich die Farbgebung des Formkörpers in einer neutralen Farbe zu gestalten. Da häufig der optische Eindruck des Innenraums bzw. der Inneneinrichtung durch eine intensiv gefärbte Scheibe verändert wird, ist die Farbgebung der Scheibe möglichst neutral einzustellen. Dabei ist ein farbneutrales grau bevorzugt. In bestimmten Ausführungsformen kann die Farbgebung hin zu einem blau-grau, einem grün-grau, rot-grau oder gelb-grau verändert werden.

So sind folgende Vorgaben bezüglich der Farbe an einen transparenten Formkörper zu erfüllen:
a*= 0 ± 5 und b* = 0 ± 5, bevorzugt a* = 0 ± 4 und b* = 0 ± 4 und insbesondere bevorzugt a* = 0 ± 2 und b* = 0 ± 2

Der Formkörper ist transparent und hat eine Anfangstrübung vor Bewitterung von weniger als 3,0 %, bevorzugt 2,5 %, insbesondere bevorzugt weniger als 2,0 %.

Der T_{DS}-Wert liegt bevorzugt bei weniger als 70%, insbesondere bevorzugt bei weniger als 60 % und ganz besonders bevorzugt bei weniger als 50 %. In einer besonderen Ausführungsform beträgt der T_{DS} -Wert weniger als 20%, besonders bevorzugt weniger als 15% (T_{DS}- Werte gemessen an optischen Farbmusterplatten mit einer Dicke von 4 mm. Die Berechnung der "Solar Direct Transmittance" T_{DS} wird nach ISO 13837, computational convention "A" durchgeführt).

Eine IR-Absorberhaltige Scheibe erwärmt sich bei Bestrahlung mit Sonnenlicht. Die gespeicherte Wärme wird dabei nach außen aber auch in den Innenraum des Fahrzeugs oder des Gebäudes abgegeben. Dieser sekundäre Wärmetransfer in den Innenraum ist kritisch, weil dieser den Innenraum zusätzlich zur direkten Wärmetransmission aufheizt. Um auch den sekundären Wärmetransfer zu berücksichtigen wird häufig für die Leistungsfähigkeit eines Systems die sogenannte "Total Solar Energy Transmitted to the Inside of a Glazing" T_{TS} nach ISO 13837 angegeben. Angestrebt wird häufig ein System mit möglichst hoher Lichttransmission (Ty) (d.h. im sichtbaren Bereich) mit geringer primärer und sekundärer Energietransmission im IR-Bereich (T_{S}).

Die Zusammensetzung muss unter den für Thermoplaste üblichen Temperaturen, d.h. bei Temperaturen oberhalb von 300 °C, wie z.B. 350 °C verarbeitbar sein, ohne daß sich bei der Verarbeitung die Farbe oder die Leistungsdaten deutlich verändern.

Transparente thermoplastische Kunststoffe im Sinne der Erfindung sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona).

Auch Mischungen von mehreren transparenten thermoplastischen Polymeren, sofern sie transparent miteinander mischbar sind, sind möglich, wobei eine Mischung aus Polycarbonat mit PMMA (weiter bevorzugt mit PMMA < 2 Gew.%) oder Polyester bevorzugt ist.

Eine spezielle Ausführungsform enthält in diesem Zusammenhang eine Mischung aus Polycarbonat und PMMA mit weniger als 2,0%, vorzugsweise weniger als 1,0%, weiter bevorzugt weniger als 0,5%, wobei mindestens 0,01 % PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2% und besonders bevorzugt 0,1% bezogen auf die Menge Polycarbonat, wobei das PMMA bevorzugt ein Molgewicht <40.000 g/mol aufweist.

Eine weitere spezielle Ausführungsform enthält eine Mischung aus PMMA und Polycarbonat mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1, 1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000

Die erfindungsgemäßen Polymer-Zusammensetzungen können neben den erfindungsgemäßen Komponenten optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Flammschutzmittel, optische Aufheller oder Fließverbesserer in den für die jeweiligen Thermoplasten üblichen Mengen.

Bevorzugt werden die weiteren Polymeradditive in Mengen von 0,0 Gew.-% bis zu 5,0 Gew.-%, weiter bevorzugt 0,01 Gew.-% bis 1,00 Gew.-%, jeweils bezogen auf die Menge der jeweiligen Polymer-Gesamtzusammensetzungen. Auch Mischungen mehrerer Zusatzstoffe sind geeignet.

Die nanoskaligen anorganischen IR-Absorber Partikel auf Boridbasis, welche Gegenstand der vorliegenden Anmeldung sind, sind vorzugsweise ein Metallborid wobei das Metall ausgewählt aus der Gruppe die La, Ce, Pr, Nd, Tb, Dy, Ho, Y, Sm, Eu, ER, Tm, Yb, Lu, Sr, Ti, Zr, Hf, V, Ta, Cr, Mo, W und Ca umfaßt. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride. Ganz besonders bevorzugt sind Boride auf Basis von Lanthanhexaborid (LaB₆) oder Mischungen enthaltend Lanthanhexaborid.

Die Oberfläche dieser Partikel ist vorzugsweise unoxidiert; jedoch können oxidierte oder teilweise oxidierte Partikel eingesetzt werden.

In einer besonderen Ausführungsform der vorliegenden Erfindung ist die alleinige Verwendung von Lanthanhexaborid (LaB₆) ganz besonders bevorzugt.

Die Herstellung der Borid-basierten IR-Absorber kann z.B. aus Oxiden der seltenen Erden wie z.B. X₂O₃ (mit X z.B. = La, Ce, Pr, Nd, Gd) und z.B. Borcarbiden (B₄C) erfolgen in dem diese Verbindungen gemischt und im Vakuum bei hohen Temperaturen, wie z.B. 1500 °C für einige Stunden, wie z.B. 3 Stunden, getempert werden. Man erhält das Borid in Form eines Pulvers. Bezüglich der Form der feinteiligen Partikel gibt es keinerlei Beschränkung - so können die Partikel eine spärische, Plättchen-artige, irreguläre oder nadelförmige Form aufweisen. Die Absorptionsfähigkeit von IR-Strahlung ist umso größer, je kristalliner die Boridpartikel sind. Jedoch weisen auch Partikel mit einer niedrigen Kristallinität (z.B. gekennzeichnet durch einen breiten Beugungspeak im Röntgenbeugungsexperiment) eine im Sinne der Erfindung ausreichende IR-Absorptionseigenschaft auf. Dies ist allerdings nur der Fall, solange die Partikel im Inneren eine Bindung aus dem verwendetem Metall und Bor aufweisen. Die Farbe der Partikel im Pulver kann z.B. gräulich-schwarz, bräunlich-schwarz, grünlich-schwarz oder dergleichen sein.

Die Durchschnittsgröße der Partikel (ermittelt durch TEM / Transmissionselektronenmikroskopie) ist bevorzugt kleiner als 200 nm, insbesondere bevorzugt kleiner gleich 150 nm und ganz besonders bevorzugt kleiner als 100 nm, wobei der mittlere Partikeldurchmesser vorzugsweise im Bereich von 1 nm bis 100 nm, weiter bevorzugt im Bereich 2 nm bis 80 nm liegt.

Bezüglich der Größenverteilung der Partikel liegen keinerlei Beschränkungen vor. So können auch bi- oder höher-modale Verteilungen vorliegen. Die Partikel sind im sichtbaren Bereich des Spektrums transparent, wobei Transparent bedeutet, dass die Absorption dieser IR-Absorber im sichtbaren Bereich verglichen mit der Absorption im IR-Bereich gering ist und der IR-Absorber zu keiner deutlich erhöhten Trübung der Zusammensetzung oder dem jeweiligen Endprodukt führt. Damit ist gemeint, dass in der Gesamtzusammensetzung der transparenten Formkörper eine Lichtransmission (in Anlehnung an ASTM 1003; angegeben als % Y bei Lichtart D65/10°) von mindesten 6 % und eine Trübung von weniger 5,0 %, bevorzugt weniger als 4,0 %, weiter bevorzugt weniger als 3,0 %, insbesondere bevorzugt weniger als 2,0 aufweist.

Die Größe der Partikel kann z.B.mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Oberfläche der Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US 2005 0161642 beschrieben.

Neben den Partikeln auf Boridbasis können - allerdings nicht notwendigerweise - weitere Partikel auf Basis von SiO₂, TiO₂, ZrO₂, Al₂O₃ oder MgO vorliegen. Diese Partikel liegen bevorzugt in einer Größe von kleiner als 200 nm vor.

In der vorliegenden Erfindung werden die feinteiligen IR-Absorber Partikel in Form einer Dispersion in die Polymermatrix eingebracht. Diese Dispersion verhindert die Reaglomeration und erleichtert die Einarbeitung in eine thermoplastische Matrix wie z.B. Polycarbonat. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, Polyether, Polyester oder Polyurethane sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt.

Der Anteil des anorganischem IR-Absorber in der Dispersion beträgt vorzugsweise 0,1 Gew.-% bis 50,0 Gew-%, bevorzugt 1,0 Gew.-% - 40,0 Gew-%, und ganz besonders bevorzugt 5,0 Gew-% - 30,0 Gew.-% bezogen auf die Summe der Masse von Dispergiermittel und anorganischem IR-Absorber. Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Vorzugsweise liegen die Boride in einer Feststoffdispersion vor.

Die Herstellung von Lanthanhexaborid sowie der Lanthanhexaborid Dispersion ist beispielsweise beschrieben in JP2003-277045, DE 10392543 sowie in Adachi et al., J. Am. Chem. Ceram. Soc 2008, 91[9], 2897-2902. Lanthanhexaborid in Form der Dispersion, welches geeignet im Sinne der Erfindung ist, ist kommerziell erhältlich von der z.B. bei der Firma Sumitomo Metal Mining Co., Ltd beispielsweise unter dem Handelsnamen KHDS 06.

Für die vorliegende Erfindung geeignete Dispergiermittel sind kommerziell erhältlich. Insbesondere sind Dispergiermittel auf Polyacrylatbasis geeignet. Polyacrylate sind z.B. unter den Handelsnamen EFKA®, z.B. EFKA® 4500 und EFKA® 4530 bei Ciba Specialty Chemicals erhältlich. Polyester-basierte Dispergiermittel sind ebenfalls geeignet. Polyesterhaltige Dispergiermittel sind unter den Handelsnamen Solsperse®, z.B. Solsperse® 22000, 24000SC, 26000, 27000 von Avecia erhältlich. Polyurethan-basierte Systeme sind ebenfalls geeignet. Diese sind unter dem Handelsnamen EFKA® 4046, EFKA® 4047 von Ciba Specialty Chemicals erhältlich. Texaphor® P60 und P63 sind entsprechende Handelsnamen der Cognis. Polyetherhaltige Dispergiermittel können ebenfalls zum Einsatz kommen. Diese sind z.B. unter den Handelsnamen Disparlon® DA234 und DA325 der Firma Kusumoto Chemicals bekannt.

Die Dispergiermittel können einzeln oder in Kombinationen verwendet werden. Hinsichtlich der thermischen Beständigkeit sind Dispergiermittel aus der Gruppe der Polyacrylate und der Polyester besonders bevorzugt.

In einer bevorzugten Ausführungsform liegt das Lanthanhexaborid in einer gebrauchsfähigen Dispersion aus einem Gemisch von Polymethylmethacrylat und Polyester in einem Feststoffgehalt von 5 Gew.-% bis 25 Gew.-% vor. Daneben können organische Lösungsmittel wie Toluol und weiter anorganische Partikel wie Zirconiumdioxid vorliegen.

In einer weiteren Ausführungsform können optional neben den erfindungsgemäßen Boriden als IR-Absorber zusätzlich weitere IR-Absorber verwendet, die vorzugsweise ausgewählt sind aus der Gruppe der Zinnoxide, weiter bevorzugt Antimon dotiertes Zinnoxid (ATO) oder Indiumzinnoxid (ITO), besonders bevorzugt ATO.

In einer weiteren bevorzugten Ausführungsform weist der/die zusätzliche(n) IR-Absorber ein von dem eingesetzten Borid unterschiedliches Absorptionsspektrum bezog e n auf die Absorptionsmaxima auf, so daß ein maximaler Absorptionsbereich durch die Maxima abgedeckt wird.

Die Polymer-Zusammensetzung enthält mindestens ein anorganisches Pigment, bevorzugt Ruß. Der Ruß liegt bevorzugt fein dispergiert in der organischen Polymermatrix vor und ist bevorzugt nanoskalig. Geeignete Ruße weisen eine durchschnittliche Teilchengröße auf von bevorzugt weniger als 100 Nanometer (nm), weiter bevorzugt weniger als 75 nm , noch weiter bevorzugt weniger als 50 nm und besonders bevorzugt weniger als 40 nm, wobei die durchschnittliche Teilchengröße vorzugsweise größer als 0,5 nm. weiter bevorzugt größer als 1 nm und besonders bevorzugt größer als 5 nm ist.

Im Sinne der Erfindung geeignete Ruße unterscheiden sich von sogenannten Leitrußen dadurch, daß sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 nm - 30 nm auf und haben eine Oberfläche von vorzugsweise 35 m² - 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern. Insbesondere bevorzugt sind Ruße, die unter dem Handelsnamen BLACK PEARLS® (CAS-Nr. 1333-86-4) gehandelt werden.

Die vorliegend angegebenen Konzentrationen für Ruße und IR-Absorber finden vorzugsweise Anwendung für Fertigteile mit Dicken von 2 mm bis 8 mm, bevorzugt 3,5 mm bis 7,0 mm und besonders bevorzugt von 4 mm bis 6 mm. Bei niedriger oder höherer Dicke müssen die Konzentrationen entsprechend nach oben bzw. unten angepasst werden, um beispielsweise eine zu starke Trübung oder eine zu geringe Wirkung zu vermeiden.

In einer besonderen Ausführungsform, bei der z.B. eine hohe Verwindungssteifigkeit erforderlich ist - z.B. bei Luft-/Schienenfahrzeugen - können Dicken von 8 mm bis 20 mm erforderlich sein. Die Konzentrationen der IR-Absorber und des anorganischen nanoskaligen Pigments müssen in diesem Fall entsprechend angepasst werden, d.h. die Konzentration nimmt mit zunehmender Schichtdicke ab.

In einer bevorzugten Ausführungsform enthält die Polymerzusammensetzung Thermo- bzw. Verarbeitungsstabilisatoren. Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritoldiphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxybenzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind.

Die erfindungsgemäßen Polymerzusammensetzungen können optional Entformungsmittel enthalten Besonders geeignete Entformungsmittel für die erfindungsgemäße Zusammensetzung sind Pentaerythrittetrastearat (PETS) oder Glycerinmonostearat (GMS).

Methoden zur Herstellung der erfindungsgemäßen Polymer-Zusammensetzungen sind dem Fachmann bekannt.

Die Herstellung der erfindungsgemäßen Polymer-Zusammensetzungen enthaltend die Komponenten a) bis j) erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren, wie unter anderem als Masterbatch, eingebracht werden.

Die Verwendung von Masterbatchen sowie von Pulvermischungen oder kompaktierten Vormischungen ist insbesondere zum Einbringen der Komponenten b) bis einschließlich j) geeignet.

Besonders bevorzugt erfolgt die Einarbeitung der Komponenten b), c), d) und e) in Form einer Pulvermischung, wobei die Pulvermischung zusätzlich pulverförmige Komponente a) enthält, oder in Form einer kompaktierten Mischung der Komponenten b), c), d) und e), ggf. zusätzlich enthaltend Komponente a), oder als Masterbatch der Komponenten a), b), c), d) und e).

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:,,Kunststoff Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind bekannt und im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Spritzgiessen ist ein Umformverfahren, welches in der Kunststoffverarbeitung eingesetzt wird.

Mit diesem Verfahren lassen sich wirtschaftlich direkt verwendbare Formteile in grosser Stückzahl herstellen. Dazu wird mit einer Spritzgiessmaschine der jeweilige Werkstoff, beziehungsweise die Formmasse, in einer Spritzeinheit plastifiziert und in ein Spritzgiesswerkzeug eingespritzt. Der Hohlraum, die Kavität, des Werkzeugs bestimmt die Form und die Oberflächenstruktur des fertigen Bauteils.

Spritzguss umfasst hier alle Spritzgiessverfahren einschliesslich Mehrkomponentenspritzguss und Spritzprägeverfahren.

Zur Herstellung von Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgiessteilen verwendet, bei welchen kurze Fliesswege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrösserte Kavität vorhanden. Tauchkanten des Werkzeuges garantieren auch bei etwas geöffneten Formplatten noch eine ausreichende Dichtigkeit der vorvergrösserten Kavität. Die Kunststoffmasse wird in diese vorvergrösserte Kavität eingespritzt und währenddessen bzw. anschliessend unter Ausführung einer Werkzeugbewegung in Schliessrichtung verpresst. Insbesondere bei der Herstellung von grossflächigen und dünnwandigen Formteilen mit langen Fliesswegen ist die aufwändigere Spritzprägetechnik bevorzugt oder ggf. zwingend erforderlich. Nur auf diese Weise wird eine Reduzierung der bei grossen Formteilen benötigten Spritzdrücke erreicht. Ferner können Spannungen bzw. Verzug im Spritzgiessteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Erfindungsgemäß bevorzugte Erzeugnisse, Formkörper oder geformte Gegenstände sind Platten, Folien, Rohre, Verscheibungen, beispielsweise Autofenster, Fenster von Schienen- und Luftfahrzeugen, Autosonnendächer, Sicherheitsscheiben, Bedachungen oder Gebäudeverglasungen, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, Ampelgehäuse, Ampelabdeckunge, Ampellinsen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2-15 µm Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A8, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

In einem besonders bevorzugtem Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei könne die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zuschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Infrarotstrahlung-(IR)-absorbierenden Polymer-Zusammensetzungen lassen sich besonders bevorzugt in Scheiben-Modulen für Automobile, Schienen- und Luftfahrzeuge einsetzen. Bevorzugt sind hierbei Scheiben-Module enthaltend: eine Basisschicht enthaltend die erfindungsgemäßen Infrarotstrahlung-(IR)-absorbierenden Polymer-Zusammensetzungen, ein auf die Basisschicht aufgebrachtes Rahmenelement sowie eine kautschukartige Pufferschicht, welche auf das Rahmenelement aufgebracht ist.

Die Basisschicht kann hierbei mit einem Lacksystem zum Beispiel zur Erhöhung der Kratzfestigkeit versehen sein. Ferner kann es von Vorteil sein, zur Haftvermittlung zwischen Rahmenelement und kautschukartiger Pufferschicht das Rahmenelement mit einem Primer zu versehen, bevor die Pufferschicht aufgebracht wird.

Zum Vermeiden von Bauteilspannungen ist darauf zu achten, daß die thermischen Ausdehnungskoeffizienten von Basisschicht und Rahmenelement durch eine geeignete Materialauswahl aufeinander abgestimmt sind. Hierbei hat es sich als vorteilhaft herausgestellt, für das Rahmenelement ein Material zu wählen, dessen linearer thermischer Ausdehnungkoeffizient in Längsrichtung (d.h. vom Anguß betrachtet in Richtung des Schmelzflusses, nachfolgend als RS abgekürzt) um 1x10⁻⁵ bis 3x10⁻⁵ (mm/mm K) niedriger ist, als der des Materials der Basisschicht. Zudem sollte das RS/QS-Verhältnis des linearen thermischen Ausdehnungskoeffizienten des jeweiligen Materials im Bereich von 0,6 bis 1,0 liegen, wobei QS die Querrichtung, d. h. die Richtung orthogonal zur vom Anguß betrachteten Richtung des Schmelzflusses meint.

Als Material für das Rahmenelement sind Blends aus Polycarbonat und Polyestern bevorzugt. Bei den Polyestern sind Polyalkylenterephthalate bevorzut. Von den Polyalkylenterephthalaten sind wiederum Polybutylenterephthalat (PBT) und Polyethylenterephthalat (PET) bevorzugt, wobei PET besonders bevorzugt ist. Zur Einstellung des linearen thermischen Ausdehnungskoeffizienten enthält das Material für das Rahmenelement Füll- und Verstärkungsstoffe, wobei die Füll- und Verstärkungsstoffe unter anderem faser-, plättchen-, röhren-, stäbchen- oder kugelförmig bzw. sphärisch oder partikulär sein können. Zu den geeigneten Füll- und Verstärkungsstoffen zählen beispielsweise Talkum, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes.

Als Material für die kautschukartige Pufferschicht eigenen sich beispielsweise Einkomponenten- oder Zweikomponenten-Polyurethanklebstoffe. Geeignete Materialien und an diese gestellte Anforderungen sind beipielsweise beschrieben in "Finite Elemente Berechnungen von Structural Glazing Elementen im Bauwesen und geklebten Frontscheiben im Automobilbau" (Böger/Schmöller, 2003) oder in der EP 0 481 319 A2 sowie hierin zitierter Literatur.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

### Bestimmung des T_{DS}-Wertes (Solar Direct Transmittance), des R_{DS}-Wertes (Solar Direct Reflectance) und des T_{TS}-Wertes (Solar Total Transmittance):

Die Transmissions- und Reflexionsmessungen wurden an einem Lambda 900 Spektralphotometer der Firma Perkin Elmer mit Photometerkugel durchgeführt. Alle Werte wurden bei Wellenlängen von 320 nm bis einschließlich 2300 nm mit Δλ 5nm bestimmt.

Die Berechnung der "Solar Direct Transmittance" T_{DS}, der Solar Reflectance R_{DS} sowie der "Solar Total TransmittanceTranmittance" T_{TS} wurde nach ISO 13837, computational convention "A" durchgeführt. Dabei wurde die Berechnung des T_{TS} - Wertes nach Anhang B der ISO 13837 durchgeführt. Dabei wurde eine vertikale Anordnung für ein stehendes Fahrzeug (nach Anhang B.2 der ISO 13837) und die unter "Note 2" im Anhang B.2 der ISO 13837 angegeben Koeffizienten für Einfachglas angenommen.

### Farbveränderung:

ΔE ist ein errechneter Wer für den empfundenen Farbabstand nach ASTM D 2244. Bei den vorliegenden Versuchen wurde Lichtart D 65/10° verwendet. Für die Berechnung des ΔE-Wertes wurde die Formel 7 in der ASTM D 2244 herangezogen.

### Trübung:

Die Trübung wurde bestimmt nach ASTM D 1003 mit einem BYK Gardner Haze Gard.

### Bewitterung:

Die künstliche Bewitterung mit Xenon-Belichtung wird nach Norm ASTM G 155 in einem Xenon-Weatherometer CI 5000 der Firma Atlas durchgeführt. Als UV-Filter wurden zwei Borosilikatfilter verwendet. Die Einstrahlungsstärke beträgt 0.75 W/m²/nm bei 340 nm. Die Schwarzstandardtemperatur beträgt 80°C, die Probenraumtemperatur 40°C. Die Proben werden alle 120 min für 18 min beregnet, wobei die Belichtung auch während der Beregnungsphase eingeschaltet bleibt.

### Partikelgrößenbestimmung:

Die Bestimmung der Partikelgröße erfolgte mittels Transmissionselektronenmikroskopie an einem Mikroskop mit der Typenbezeichnung EM 208 der Firma FEI Company (5651 GG Eindhoven, Niederlande). Dazu wurde der IR-Absorber mittels eines Achatmörsers aufgerieben und danach mittels Ultraschall in Ethanol auf einem Kupferträgernetz (für Transmissionselektronenspektroskopie) präpariert. Es wurde Aufnahmen in einer 310000-fachen Vergrößerung angefertigt. Die Partikelgröße wurde mittels bildanalytischer Meßmethoden im Hellfeldkontrast (Auswertung der Partikelgröße über Grauwertkontrast) bestimmt.

Materialien zur Herstellung der Probekörper:
Komponente a)
   - Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1033), nachfolgend als PC 1 bezeichnet.
   - Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), nachfolgend als PC 2 bezeichnet.
   PC 2 enthält noch eine Additivmischung bestehend aus Entformungsmittel, Thermostabilisator und UV-Stabilisator. Als Entformungsmittel wird Pentaerythrittetrastearat (CAS 115-83-3), als Thermostabilisator Triphenylphosphin (CAS 603-35-0) und als UV-Stabilisator Tinuvin® 329 (CAS 3147-75-9) eingesetz.
Komponente b)
   - Lanthanhexaborid, LaB₆ (KHDS 06 der Firma Sumitomo Metal Mining, Japan, CAS-No. 857255-66-4). Das Produkt liegt in Form einer pulverförmigen Dispersion vor. Die Gewichtsangaben in den Beispielen beziehen sich auf das Produkt KHDS 06, wobei der Feststoffgehalt an Lanthanhexaborid in der eingesetzten kommerziellen KHDS 06-Dispersion 21,5 Gew.-% beträgt.
   - Lanthanhexaborid, LaB₆ (KHDS 872G2 der Firma Sumitomo Metal Mining, Japan, CAS-No. 949005-03-2). Das Produkt liegt in Form einer pulverförmigen Dispersion vor. Die Gewichtsangaben in den Beispielen beziehen sich auf das Produkt KHDS 872G2, wobei der Feststoffgehalt an Lanthanhexaborid in der eingesetzten kommerziellen KHDS 872G2 Dispersion 10,0 Gew.-% beträgt.
Komponente c)
   - Als nanoskaliger Ruß (Partikelgröße ca . 17 nm) werden Black Pearls® 800 (CAS-No. 1333-86-4) der Firma Cabot Corp. eingesetzt.
Komponente d)
   - Als Farbmittel der Formel (1a, 1b) wird das Produkt aus A (alle R = H; siehe unten) verwendet.
   - Als Farbmittel der Formel (2a, 2b) wird das Produkt aus B. (alle R = H; siehe unten) verwendet.
   - Als Farbmittel der Formel (3) wird Macrolex Violet B (Solvent Violet 13) von der Firma Lanxess AG, Leverkusen, verwendet.
Komponente e)
   - Als Farbmittel der Struktur (4) wird Macrolex Rot EG (Solvent Red 135, CAS-No. 20749-68-2)) von der Firma Lanxess AG, Leverkusen, verwendet.
   - Als Farbmittel der Struktur (7) Paliogen Blau L 6385 (Pigment Blue 60, CAS-No. 81-77-6) von der BASF SE, 67065 Ludwigshafen, Deutschland, verwendet. Dieses Farbmittel weist ein Schüttvolumen von 7 1/kg, einen pH-Wert von 6 - 9 und eine spezifische Oberfläche von 40 m2/g auf.
   - Als Farbmittel der Struktur (8b) wird Heliogen Blau K 6911D (CAS-No. 147-14-8) der Firma BASF SE, 67065 Ludwigshafen, Deutschland verwendet.

### Farbmittel für Vergleichsbeispiele

Als weiteres nicht erfindungsgemäßes Farbmittel wird Macrolex Blau RR (Color Index: Solvent Blue 97; CAS: 32724-62-2) der Firma Lanxess Deutschland GmbH eingesetzt.

Als weiteres nicht erfindungsgemäßes Farbmittel wird Macrolex Violett 3R Gran. (Color Index: Solvent Violet 36; CAS: 61951-89-1) der Firma Lanxess Deutschland GmbH eingesetzt.
Komponente f)
   - Als weiterer IR-Absorber wird Lumogen IR 765 (ein Quaterrylen, CAS-No. 943969-69-5) der Firma BASF SE, 67065 Ludwigshafen, Deutschland verwendet.

Als IR-Absorber auf Basis von ATO wurde eine pulverförmige Dispersion (FMDS 874 der Firma Sumitomo Metal Mining, Japan, Polyacrylat-Dispersion, CAS-No. 953384-75-3) eingesetzt, wobei der Feststoffgehalt an SnO₂:Sb in der Dispersion 25 Gew.-% betrug.

### Herstellung der Polymerzusammensetzungen durch Compoundierung:

Die Compoundierung der Additive erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit der in den Beispielen angegebenen Mengen an Komponenten. Hierbei wird zunächst zur besseren Vermischung eine Pulvermischung aus PC 1 (10 Gew.-% Pulvermischung bezogen auf die Gesamtzusammensetzung) enthaltend die unten angegebenen weiteren Komponenten angefertigt. Diese Pulvermischung wird bei der Compoundierung zu PC 2 zudosiert.

### Herstellung der Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x Z mm) verarbeitet; Z ist dabei 3,2 , 4,0 bzw 5,0 mm.

### Herstellung von Substanzen der Komponente d)

Unter anderem wurden in den erfindungsgemäßen Beispielen Strukturen der Formel (1a), (1b), (2a) und (2b) eingesetzt. Die Herstellung dieser Farbstoffe erfolgte in Anlehnung an DE 2148101 wie folgt:

### A. Herstellung eines 1:1 Gemisches (Gew.-%) von (1a) und (1b):

5,62g (0,025mol) Benzol-1,2,4,5-tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 125ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80°C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 500ml Wasser gegeben. Der Niederschlag wird abfiltriert, mit Wasser gewaschen und im Hochvakuum bei 80 °C getrocknet. Man erhält 12,5g lila-farbendes Pulver.

### B. Herstellung eines 1:1 Gemisches (Gew.-%) von (2a) und (2b):

6,71g (0,025mol) Naphthalin-1,4,5,8- tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 152 ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80 °C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 125ml Wasser gegeben. Der Niederschlag wird abfiltriert, mit heißem Wasser gewaschen und im Hochvakuum bei 80 °C getrocknet. Man erhält 13,7g lila-farbendes Pulver.

### Lackierung der Prüfkörper:

Als Primer wird das Produkt SHP470FT (Momentive Performance Materials Inc. Wilton, CT USA) verwendet. Als Schutzlack wird das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Prüfkörper wurden mit sogenannten Iso-Tüchern (LymSat^{®} der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probekörper erfolgt per Hand nach dem Flutverfahren. Hierbei wird die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Um eine ausreichende und vergleichbare Schutzwirkung gegen Bewitterung zu erreichen soll die Primerschichtdicke für die nachfolgenden Beispiele im Bereich 1,2 - 4,0 µm und die Dicke des Topcoats zwischen 4,0 und 8,0 µm liegen.

### Beispiel 1 (Vergleichsbeispiel)

Es wird eine Polymerzusammensetzung enthaltend die Mengen der folgenden Komponenten durch Compoundierung hergestellt.

| | |
|---|---|
| Macrolex Rot EG (Komponente e)) : | 0,00313 Gew.-% |
| Macrolex Blau RR (Farbmittel für Vergleichsbeispiele) : | 0,00320 Gew.-% |
| Lumogen IR 765 (Komponente f)): | 0,00180 Gew.-% |
| KHDS 06 (Komponente b)): | 0,01350 Gew.-% |
| BlackPearls 800 (Komponente c)): | 0,00144 Gew.-% |
| PC 1 (Komponente a)): | 9,97693 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 2 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Rot EG (Komponente e)): | 0,00335 Gew.-% |
| Macrolex Blau RR (Farbmittel für Vergleichsbeispiele): | 0,00315 Gew.-% |
| Lumogen IR 765 (Komponente f)): | 0,00140 Gew.-% |
| KHDS 872G2 (Komponente b)): | 0,06000 Gew.-% |
| BlackPearls 800 (Komponente c)): | 0,00128 Gew.-% |
| PC 1 (Komponente a)): | 9,93082 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 3 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Rot EG (Komponente e)): | 0,002450 Gew.-% |
| Macrolex Blau RR (Farbmittel für Vergleichsbeispiele): | 0,003090 Gew.-% |
| Heliogen Blau K6911D (Komponente e)): | 0,000095 Gew.-% |
| KHDS 872G2 (Komponente b)): | 0,057000 Gew.-% |
| BlackPearls 800 (Komponente c)): | 0,001410 Gew.-% |
| PC 1 (Komponente a)): | 9,935955 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 4 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Rot EG (Komponente e)): | 0,00550 Gew.-% |
| Macrolex Blau RR (Farbmittel für Vergleichsbeispiele): | 0,00392 Gew.-% |
| Heliogen Blau K6911D (Komponente e)): | 0,00133 Gew.-% |
| KHDS 06 (Komponente b)): | 0,03130 Gew.-% |
| BlackPearls 800 (Komponente c)): | 0,00167 Gew.-% |
| PC 1 (Komponente a)): | 9,95628 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 5 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Rot EG (Komponente e)): | 0,00370 Gew.-% |
| Macrolex Violett 3R Gran (Farbmittel für Vergleichsbeispiele): | 0,00240 Gew.-% |
| Heliogen Blau K6911D (Komponente e)): | 0,00230 Gew.-% |
| KHDS 06 (Komponente b)): | 0,03000 Gew.-% |
| BlackPearls 800 (Komponente c)): | 0,00065 Gew.-% |
| PC 1 (Komponente a)): | 9,96095 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 6 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Rot EG (Komponente e)): | 0,00470 Gew.-% |
| Macrolex Violett 3R Gran (Farbmittel für Vergleichsbeispiele): | 0,00117 Gew.-% |
| Heliogen Blau K6911D (Komponente e)): | 0,00262 Gew.-% |
| YMDS 874 (IR-Absorber auf Basis von ATO): | 0,10000 Gew.-% |
| BlackPearls 800 (Komponente c)): | 0,00188 Gew.-% |
| PC 1 (Komponente a)): | 9,88963 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 7 (Erfindungsgemäß)

Es wird eine Polymerzusammensetzung enthaltend die Mengen der folgenden Komponenten wie oben beschrieben (Bsp. 1) hergestellt:

| | |
|---|---|
| Paliogen Blau L6385 (Komponente e)): | 0,00210 Gew.-% |
| A. 1:1 Gemisch (Gew.-%) von (1a) und (1b) ((Komponente d)): | 0,00147 Gew.-% |
| KHDS 872G2 (Komponente b)): | 0,07500 Gew.-% |
| BlackPearls 800 (Komponente c)): | 0,00165 Gew.-% |
| PC 1 (Komponente a)): | 9,91978 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 8 (Erfindungsgemäß)

Es wird eine Polymerzusammensetzung enthaltend die Mengen der folgenden Komponenten wie oben beschrieben (Bsp. 1) hergestellt:

| | |
|---|---|
| Paliogen Blau L6385 (Komponente e)): | 0,00278 Gew.-% |
| 1:1 Gemisches (Gew.-%) von (1a) und (1b) (Komponente d)): | 0,00236 Gew.-% |
| KHDS 872G2 (Komponente b)): | 0,07000 Gew.-% |
| BlackPearls 800 (Komponente c)): | 0,00220 Gew.-% |
| PC 1 (Komponente a)): | 9,92266 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 9 (Erfindungsgemäß);

Es wird eine Polymerzusammensetzung enthaltend die Mengen der folgenden Komponenten wie oben beschrieben (Bsp. 1) hergestellt:

| | |
|---|---|
| Paliogen Blau L6385 (Komponente e)): | 0,00211 Gew.-% |
| 1:1 Gemisch (Gew.-%) von (1a) und (1b) (Komponente d)): | 0,00248 Gew.-% |
| KHDS 872G2 (Komponente b)): | 0,09000 Gew.-% |
| FMDS 874 (IR-Absorber auf Basis von ATO): | 0,12552 Gew.-% |
| BlackPearls 800 (Komponente c)): | 0,00139 Gew.-% |
| PC 1 (Komponente a)): | 9,77850 Gew.-% |
| PC 2 (Komponente a)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

**Tabelle 1: Ausgangsdaten; unbewittert**

| Beispiel | Dicke der Platte [mm] | Primer/ TopCoat [µm] | Ty % | T_{DS} % | T_{TS} % | a* | b* | L* |
|---|---|---|---|---|---|---|---|---|
| 1 (Vergleich) | 5,0 | 2,2/5,1 | 7,40 | 8,05 | 32,15 | -2,83 | 2,70 | 32,70 |
| 2 (Vergleich) | 5,0 | 1.7/5.6 | 7,97 | 7,39 | 31,72 | -2,42 | 2,55 | 33,92 |
| 3 (Vergleich) | 5,0 | 1.4/5.4 | 7,12 | 6,85 | 31,32 | -3,68 | 3,73 | 32,09 |
| 4 (Vergleich) | 3,2 | 1.8/4.3 | 8,53 | 8,48 | 31,60 | -4,98 | 4,21 | 35,07 |
| 5 (Vergleich) | 3,2 | 1,3/6,1 | 15,5 | 13,61 | 35,81 | -2,09 | -2,47 | 46,31 |
| 6 (Vergleich) | 4,0 | 2.8/4.2 | 8,84 | 9,26 | 32,80 | -1,16 | -2,09 | 35,68 |
| 7 (erfindungsgemäß) | 5,0 | 1.6/6.1 | 7,75 | 5,80 | 30,60 | -3,83 | 2,59 | 33,46 |
| 8 (erfindungsgemäß) | 3,2 | 1.4/6.4 | 13,50 | 11,87 | 33,07 | -0,88 | 0,36 | 43,50 |
| 9 (erfindungsgemäß) | 3,2 | 1.5/6.3 | 12,28 | 7,84 | 31,24 | -0,10 | 0,70 | 41,66 |

| Tabelle 2: ΔE, ΔT_{DS}, ΔT_{TS} | ΔE | ΔE | ΔE | AT_{DS} | ΔT_{DS} | AT_{DS} | ΔT_{TS} | ΔT_{TS} | ΔT_{TS} |
|---|---|---|---|---|---|---|---|---|---|
| nach BewitterungBsp | 1000h | 2000h | 3000h | 1000h | 2000h | 3000h | 1000h | 2000h | 3000h |
| 1 (Vergleich) | 1,89 | 3,41 | 4,76 | 0,37 | 0,64 | 0,83 | 0,27 | 0,46 | 0,60 |
| 2 (Vergleich) | 1,88 | 3,60 | 5,10 | 0,32 | 0,57 | 0,81 | 0,23 | 0,41 | 0,58 |
| 3 (Vergleich) | 1,85 | 3,69 | 5,11 | 0,25 | 0,49 | 0,67 | 0,18 | 0,35 | 0,49 |
| 4 (Vergleich) | 3,01 | 5,30 | 7,29 | 0,45 | 0,81 | 1,00 | 0,33 | 0,59 | 0,73 |
| 5 (Vergleich) | 1,50 | 2,73 | 3,77 | 0,60 | 0,90 | 1,20 | 0,43 | 0,65 | 0,87 |
| 6 (Vergleich) | 1,44 | 2,64 | 3,71 | 2,93 | 3,68 | 4,26 | 2,12 | 2,66 | 3,09 |
| 7 (erfindungsgemäß) | 0,82 | 1,34 | 1,74 | 0,20 | 0,32 | 0,42 | 0,23 | 0,31 | 0,39 |
| 8 (erfindungsgemäß) | 0,94 | 1,29 | 1,69 | 0,37 | 0,60 | 0,72 | 0,27 | 0,43 | 0,52 |
| 9 (erfindungsgemäß) | 1,02 | 1,80 | 2,91 | 0,32 | 0,46 | 0,46 | 0,23 | 0,33 | 0,33 |

Insgesamt ist festzustellen, dass nur die erfindungsgemäßen Mischungen die geforderte Farbstabilität (ΔE) verbunden mit einer hohen IR-Stabilität (ΔT_{DS}) aufweisen.

Die Vergleichsbeispiele zeigen, dass die Farbmittel nicht beliebig kombiniert werden können. Die Vergleichsbeispiele 1 bis 6 weisen zwar einen ähnlichen Farbeindruck wie die erfindungsgemäßen Beispiele auf. Allerdings zeigen diese Beispiele eine deutliche und unerwünschte Farbverschiebung nach Bewitterung. Auch wenn die Vergleichsbeispiele zum Teil Farbmittel enthalten, die auch in den erfindungsgemäßen Zusammensetzungen verwendet werden, sind diese nicht witterungsstabil. Damit zeigt sich überraschend, dass nur die Verwendung der erfindungsgemäßen Farbmittelkombinationen zu den erwünschten farbstabilen Polymerzusammensetzungen führt. Selbst der Austausch eines erfindungsgemäßen Farbmittels in der entsprechen Kombination bzw. der Austausch eines anorganischen IR-Absorbers durch eine strukturähnliche farbgebene Substanz bzw. einen anderen anorganischen IR-Absorber führt zu einer signifikanten Beeinträchtigung der Farbstabilität bei Bewitterung.

## Patentansprüche

1. Polymer-Zusammensetzung enthaltend
a. mindestens einen transparenten thermoplastischen Kunststoff;
b. mindestens einen anorganischen IR Absorber aus der Gruppe der Boridverbindungen
c. mindestens ein anorganisches, nanoskaliges Pigment,
d. mindestens ein Farbmittel ausgewählt aus der Gruppe die die folgenden Strukturen umfaßt:
1a, 1b: 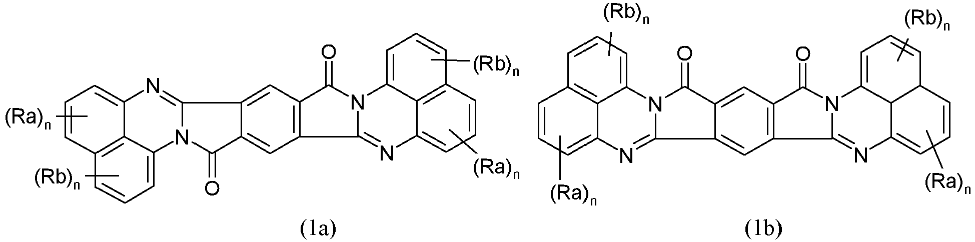 wobei
- Ra und Rb unabhängig voneinander für einen linearen oder verzweigten Alkylrest, oder Halogen steht;
- n steht unabhängig vom jeweiligen R für eine natürliche Zahl zwischen 0 und 3, wobei der Rest für n=0 Wasserstoff ist;
2a, 2b: 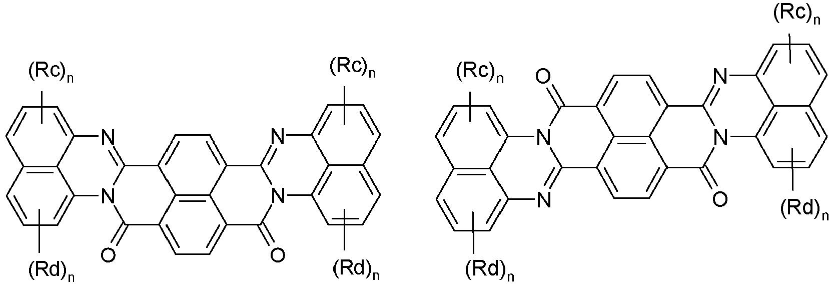 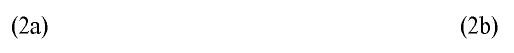 wobei
- Rc und Rd unabhängig voneinander für einen linearen oder verzweigten Alkylrest, oder Halogen steht;
- n steht unabhängig vom jeweiligen R für eine natürliche Zahl zwischen 0 und 3, wobei der Rest für n=0 Wasserstoff ist;
3: 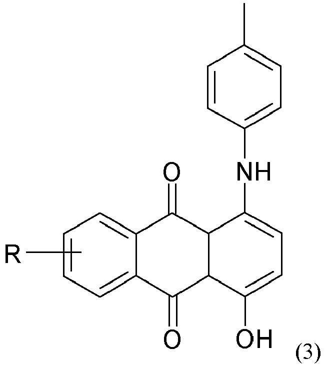 wobei
R ausgewählt ist aus der Gruppe, die aus H und p-Methylphenlyamin-Rest besteht;
e) und mindestens ein Farbmittel ausgewählt aus der Gruppe die die folgenden Strukturen umfaßt:
4: 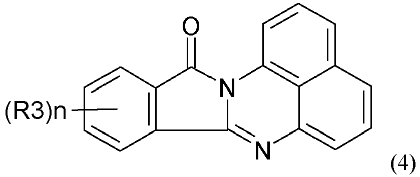 wobei
R3 Halogen ist;
n=4 ist;.
5: 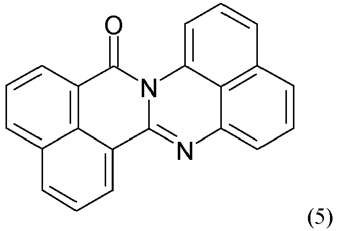
6: 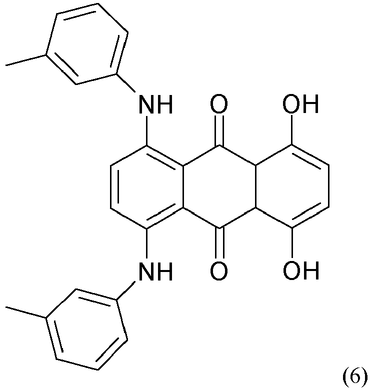
7: 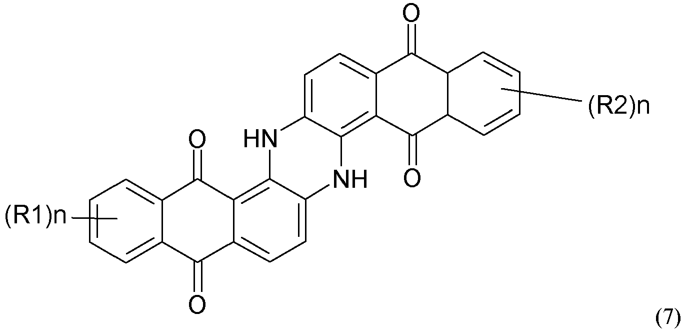 wobei
- R1 und R2 unabhängig voneinander für einen linearen oder verzweigten Alkylrest, oder Halogen steht;
- n für eine natürliche Zahl zwischen 0 und 4 steht;
8a, 8b: 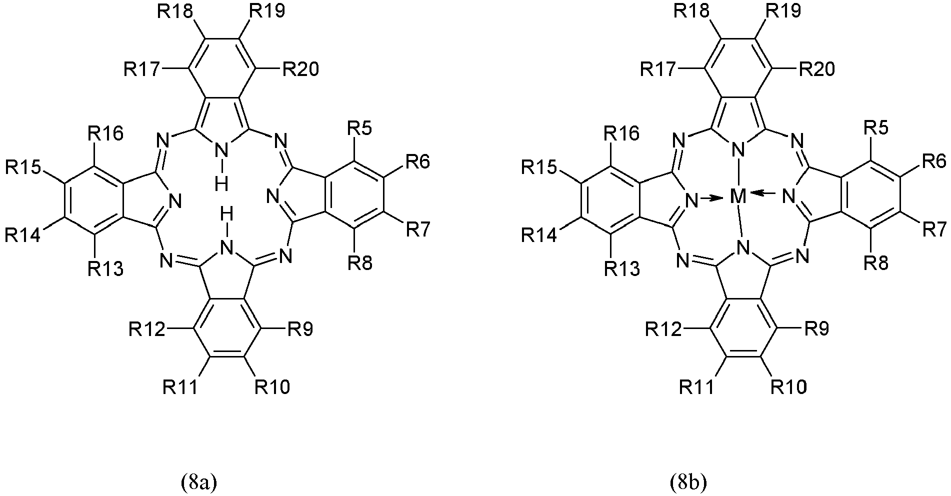 wobei
- die Reste R(5-20) jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind, und
- M ist ausgewählt aus der Gruppe, die Aluminium, Nickel, Cobalt, Eisen, Zink, Kupfer und Mangan umfaßt.

2. Zusammensetzung nach Anspruch 1, **dadurch gekennzeichnet, daß** die Zusammensetzung die Farbmittel der Strukturen (1a) und (1b) und/oder (2a) und (2b) in einem 1:1 Isomerengemisch enthält.

3. Zusammensetzung nach Anspruch 1 oder 2, **dadurch gekennzeichnet, daß** die Zusammensetzung die Farbmittel der Strukturen (1a) und (1b) und/oder (2a) und (2b) jeweils nur als ein reines Isomer enthält.

4. Zusammensetzung nach einem der Ansprüche 1 bis 3, **dadurch gekennzeichnet, daß** die Farbmittel der Komponente d) zu den Farbmitteln der Komponente e) in einem Verhältnis von 1:3 bis 3:1 vorliegen.

5. Zusammensetzung nach Anspruch 1, enthaltend eine Farbmittelkombination ausgewählt aus der Gruppe die umfaßt:
I. (1a) und/oder (1b), (4), (2a) und/oder(2b)
II. (1a) und/oder (1b), (5), (2a) und/oder(2b)
III. (1a) und/oder (1b), (7)
IV. (1a) und/oder (1b), (4), (7)
V. (1a) und/oder (1b), (5), (7)
VI. (4), (2a) und/oder(2b)
VII. (5), (2a) und/oder(2b)
VIII. (2a) und/oder(2b), (4), (6)
IX. (2a) und/oder(2b), (5), (6)
X. (3), (4)
XI. (3), (5)
XII. (3), (4), (6)
XIII. (3), (5), (6)
XIV. (3), (4), (7)
XV. (3), (5), (7)
XVI. (3), (4), (2a) und/oder(2b)
XVII. (3), (5), (2a) und/oder(2b)
XVIII. (6), (1a) und/oder (1b)
XIX. (6), (1a) und/oder (1b), (7)
XX. (1a) und/oder (1b), (8).

6. Zusammensetzung nach Anspruch 1, **dadurch gekennzeichnet, daß** der thermoplastische Kunststoff ein Polycarbonat ist.

7. Zusammensetzung nach Anspruch 1, **dadurch gekennzeichnet, daß** das nanoskalige Pigment Ruß und der IR-Absorber Lanthanhexaborid ist.

8. Zusammensetzung nach Anspruch 1, **dadurch gekennzeichnet, daß** der IR-Absorber in einem Anteil von 0,00150 Gew% - 0,01500 Gew.-% berechnet als Feststoffanteil an Metallborid in der Polymergesamtzusammensetzung enthalten ist.

9. Zusammensetzung nach Anspruch 1, **dadurch gekennzeichnet, daß** das nanoskalige Pigment einem Anteil von 0,00020 Gew.% - 0,00350 Gew.% bezogen auf die Gesamtzusammensetzung enthalten ist.

10. Zusammensetzung nach Anspruch 1, **dadurch gekennzeichnet, daß** die Farbmittel der Komponente d) können bezogen auf die jeweilige Einzelkomponente in Mengen von 0,00001 Gew.-% bis 0,30000 Gew.-% eingesetzt werden.

11. Zusammensetzung nach Anspruch 1, **dadurch gekennzeichnet, daß** die Zusammensetzung weitere Additive aus der Gruppe der UV-Absorber, Entformer, Thermo- und Verarbeitungsstabilisatoren enthält.

12. Verwendung einer Zusammensetzung nach Anspruch 1 zur Herstellung von Fahrzeug- und Gebäudeverscheibungen.

13. Fahrzeugscheibe oder Gebäudescheibe hergestellt aus einer Polymerzusammensetzung nach einem der Ansprüche 1 bis 11.

14. Fahrzeugscheibe oder Gebäudescheibe nach Anspruch 13, **dadurch gekennzeichnet, daß** diese eine Kratzfestbeschichtung mit UV-Absorber aufweist.

15. Fahrzeugscheibe oder Gebäudescheibe nach Anspruch 13 oder 14, **dadurch gekennzeichnet, daß** die Scheibe eine Polycarbonatscheibe ist und die Veränderung des Farbwertes E nach 3000 h künstlicher Bewitterung mit Xenon-Belichtung bei 0,75 W kleiner als 5,0 ist.

## Claims

1. Polymer composition containing
a. at least one transparent thermoplastic plastic;
b. at least one inorganic IR absorber from the group of the boride compounds,
c. at least one inorganic, nano-scale pigment,
d. at least one colouring agent selected from the group comprising the following structures:
1a, 1b: 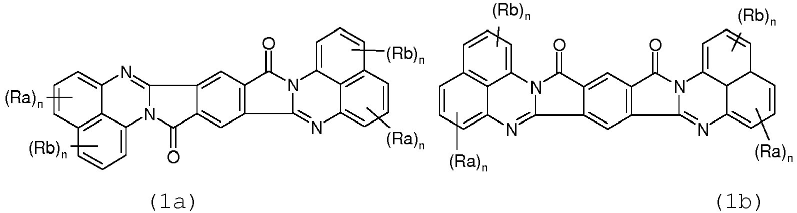 wherein
- Ra and Rb independently of one another represent a linear or branched alkyl radical, or halogen;
- n independently of the respective R represents a natural number from 0 to 3, the radical for n=0 being hydrogen;
2a, 2b: 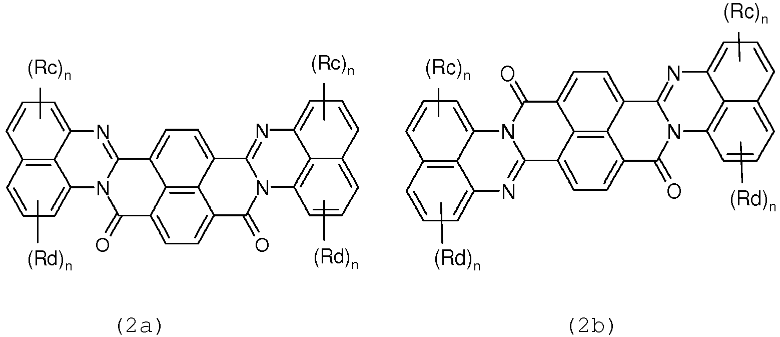 wherein
- Rc and Rd independently of one another represent a linear or branched alkyl radical, or halogen;
- n independently of the respective R represents a natural number from 0 to 3, the radical for n=0 being hydrogen;
3: 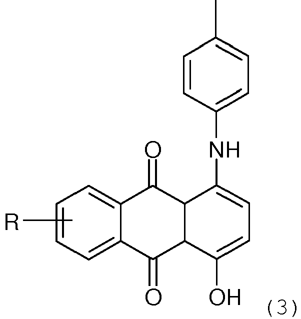 wherein
R is selected from the group consisting of H and p-methylphenylamine radical;
e) and at least one colouring agent selected from the group comprising the following structures
4: 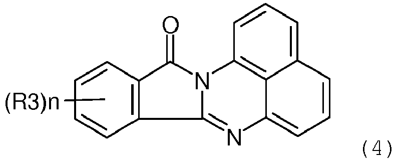 wherein
R3 is halogen;
n=4;.
5 : 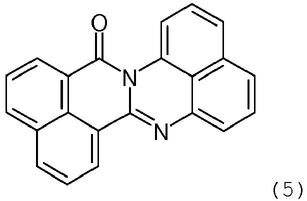
6: 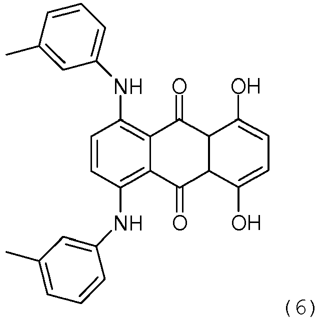
7 : 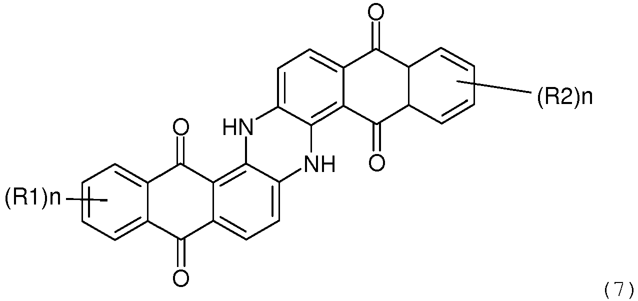 wherein
- R1 and R2 independently of one another represent a linear or branched alkyl radical, or halogen;
- n represents a natural number from 0 to 4;
8a, 8b: 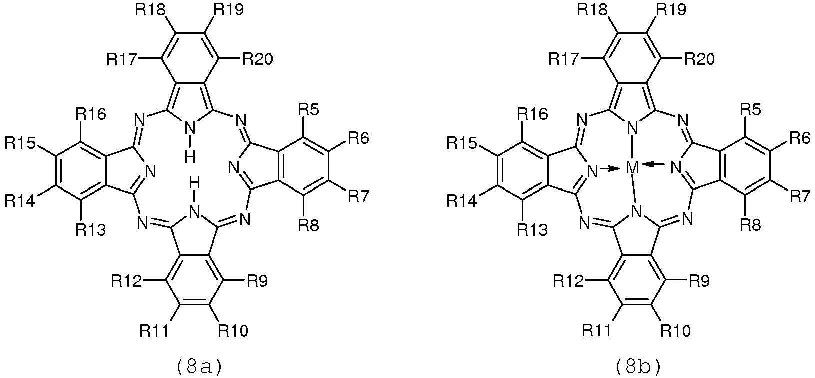 wherein
- the radicals R(5-20) each independently of the others are hydrogen, methyl, ethyl, propyl, isopropyl, butyl, isobutyl, tert-butyl, pentyl, neopentyl, hexyl, thexyl, fluorine, chlorine, bromine, sulfone or CN, and
- M is selected from the group comprising aluminium, nickel, cobalt, iron, zinc, copper and manganese.

2. Composition according to claim 1, **characterised in that** the composition contains the colouring agents of structures (1a) and (1b) and/or (2a) and (2b) in a 1:1 isomer mixture.

3. Composition according to claim 1 or 2, **characterised in that** the composition contains the colouring agents of structures (1a) and (1b) and/or (2a) and (2b) in each case only in the form of a pure isomer.

4. Composition according to any one of claims 1 to 3, **characterised in that** the colouring agents of component d) and the colouring agents of component e) are present in a ratio of from 1:3 to 3:1.

5. Composition according to claim 1, containing a colouring agent combination selected from the group comprising:
I. (1a) and/or (1b), (4), (2a) and/or (2b)
II. (1a) and/or (1b), (5), (2a) and/or (2b)
III. (1a) and/or (1b), (7)
IV. (1a) and/or (1b), (4), (7)
V. (1a) and/or (1b), (5), (7)
VI. (4), (2a) and/or (2b)
VII. (5), (2a) and/or (2b)
VIII. (2a) and/or (2b), (4), (6)
IX. (2a) and/or (2b), (5), (6)
X. (3), (4)
XI. (3), (5)
XII. (3), (4), (6)
XIII. (3), (5), (6)
XIV. (3), (4), (7)
XV. (3), (5), (7)
XVI. (3), (4), (2a) and/or (2b)
XVII. (3), (5), (2a) and/or (2b)
XVIII. (6), (1a) and/or (1b)
XIX. (6), (1a) and/or (1b), (7)
XX. (1a) and/or (1b), (8).

6. Composition according to claim 1, **characterised in that** the thermoplastic plastic is a polycarbonate.

7. Composition according to claim 1, **characterised in that** the nano-scale pigment is carbon black and the IR absorber is lanthanum hexaboride.

8. Composition according to claim 1, **characterised in that** the IR absorber is present in an amount of from 0.00150 wt.% to 0.01500 wt.%, calculated as solids content of metal boride in the polymer composition as a whole.

9. Composition according to claim 1, **characterised in that** the nano-scale pigment is present in an amount of from 0.00020 wt.% to 0.00350 wt.%, based on the composition as a whole.

10. Composition according to claim 1, **characterised in that** the colouring agents of component d) can be used in amounts of from 0.00001 wt.% to 0.30000 wt.%, based on the individual component in question.

11. Composition according to claim 1, **characterised in that** the composition contains further additives from the group of the UV absorbers, demoulding agents, heat stabilisers and processing stabilisers.

12. Use of a composition according to claim 1 in the production of automotive and architectural glazing.

13. Automotive glazing or architectural glazing produced from a polymer composition according to any one of claims 1 to 11.

14. Automotive glazing or architectural glazing according to claim 13, **characterised in that** it has a scratch-resistant coating containing UV absorbers.

15. Automotive glazing or architectural glazing according to claim 13 or 14, **characterised in that** the glazing is polycarbonate glazing and the change in the colour value E after 3000 hours' artificial weathering with xenon illumination at 0.75 W is less than 5.0.

## Revendications

1. Composition polymère, contenant :
a. au moins un plastique thermoplastique transparent;
b. au moins un absorbeur IR inorganique du groupe des composés de borure ;
c. au moins un pigment inorganique nanométrique ;
d. au moins un colorant choisi dans le groupe qui comprend les structures suivantes :
1a, 1b : 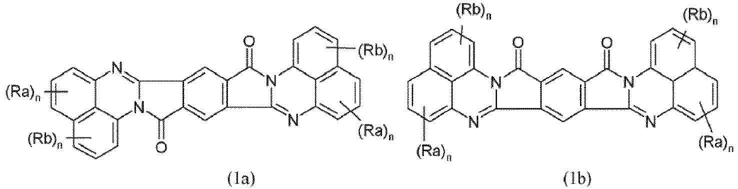 dans lesquelles
- Ra et Rb représentent indépendamment l'un de l'autre un radical alkyle linéaire ou ramifié, ou halogène ;
- n représente indépendamment du R en question un nombre naturel compris entre 0 et 3, le radical pour n = 0 étant l'hydrogène ;
2a, 2b : 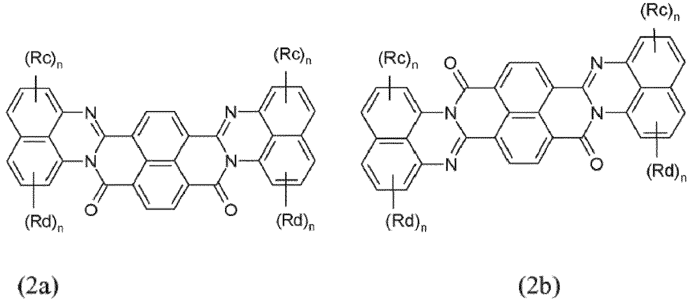 dans lesquelles
- Rc et Rd représentent indépendamment l'un de l'autre un radical alkyle linéaire ou ramifié, ou halogène ;
- n représente indépendamment du R en question un nombre naturel compris entre 0 et 3, le radical pour n = 0 étant l'hydrogène ;
3 : 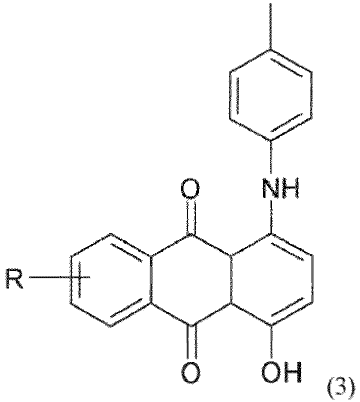 dans laquelle
R est choisi dans le groupe constitué par H et le radical p-méthylphénylamine ;
c) et au moins un colorant choisi dans le groupe qui comprend les structures suivantes :
4 : 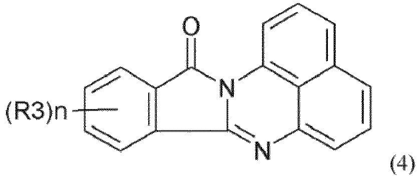 dans laquelle
R3 représente halogène ;
n = 4 ;
5 : 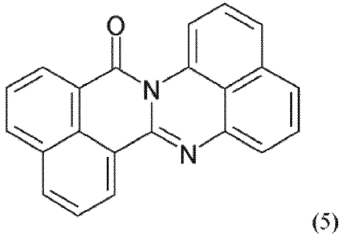
6 : 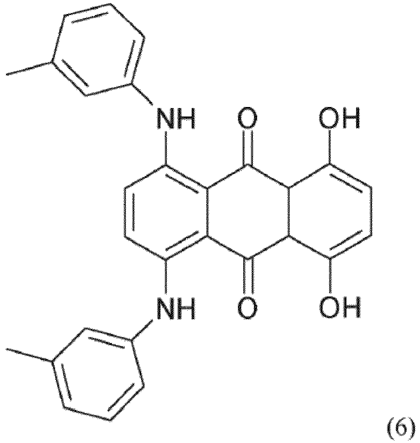
7 : 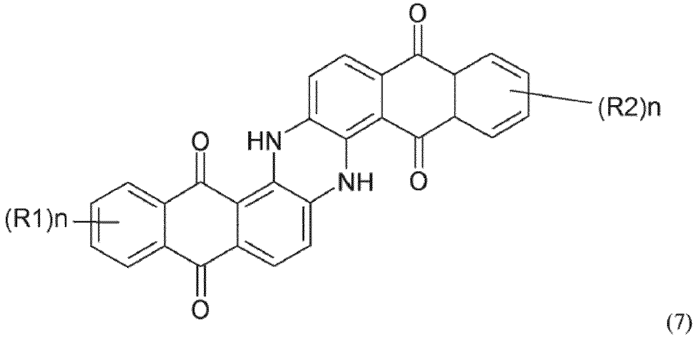 dans lesquelles
- R1 et R2 représentent indépendamment l'un de l'autre un radical alkyle linéaire ou ramifié, ou halogène ;
- n représente un nombre naturel compris entre 0 et 4 ;
8a, 8b : 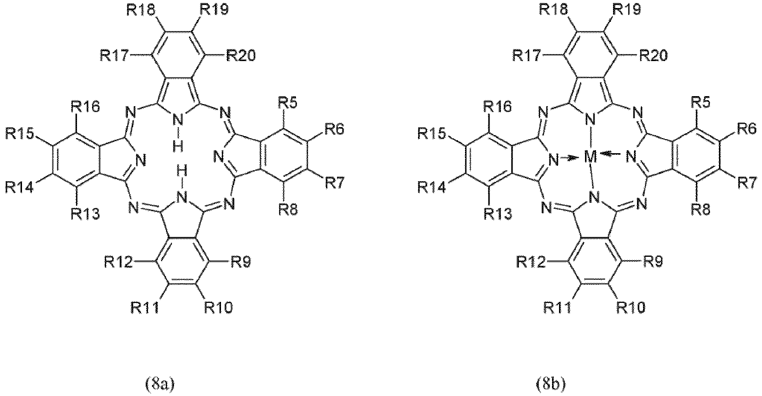 dans lesquelles
- les radicaux R(5-20) représentent indépendamment les uns des autres hydrogène, méthyle, éthyle, propyle, isopropyle, butyle, isobutyle, tert.-butyle, pentyle, néopentyle, hexyle, thexyle, fluor, chlore, brome, sulfone ou CN, et
- M est choisi dans le groupe qui comprend aluminium, nickel, cobalt, fer, zinc, cuivre et manganèse.

2. Composition selon la revendication 1, **caractérisée en ce que** la composition contient les colorants des structures (1a) et (1b) et/ou (2a) et (2b) dans un mélange d'isomères 1:1.

3. Composition selon la revendication 1 ou 2, **caractérisée en ce que** la composition contient les colorants des structures (1a) et (1b) et/ou (2a) et (2b) à chaque fois uniquement sous la forme d'un isomère pur.

4. Composition selon l'une quelconque des revendications 1 à 3, **caractérisée en ce que** les colorants du composant d) sont présents par rapport aux colorants du composant e) en un rapport de 1:3 à 3:1.

5. Composition selon la revendication 1, contenant une combinaison de colorants choisie dans le groupe qui comprend :
I. (1a) et/ou (1b), (4), (2a) et/ou (2b),
II. (1a) et/ou (1b), (5), (2a) et/ou (2b),
III. (1a) et/ou (1b), (7),
IV. (1a) et/ou (1b), (4), (7),
V. (1a) et/ou (1b), (5), (7),
VI. (4), (2a) et/ou (2b)
VII. (5), (2a) et/ou (2b)
VIII. (2a) et/ou (2b), (4), (6),
IX. (2a) et/ou (2b), (5), (6),
X. (3), (4),
XI. (3), (5),
XII. (3), (4), (6),
XIII. (3), (5), (6),
XIV. (3), (4), (7),
XV. (3), (5), (7),
XVI. (3), (4), (2a) et/ou (2b),
XVII. (3), (5), (2a) et/ou (2b),
XVIII. (6), (1a) et/ou (1b),
XIX. (6), (1a) et/ou (1b), (7),
XX. (1a) et/ou (1b), (8).

6. Composition selon la revendication 1, **caractérisée en ce que** le plastique thermoplastique est un polycarbonate.

7. Composition selon la revendication 1, **caractérisée en ce que** le pigment nanométrique est du noir de carbone et l'absorbeur IR est l'hexaborure de lanthane.

8. Composition selon la revendication 1, **caractérisée en ce que** l'absorbeur IR est contenu en une proportion de 0,00150 % en poids à 0,01500 % en poids, calculé en tant que teneur en solides de borure métallique dans la composition polymère totale.

9. Composition selon la revendication 1, **caractérisée en ce que** le pigment nanométrique est contenu en une proportion de 0,00020 % en poids à 0,00350 % en poids par rapport à la composition totale.

10. Composition selon la revendication 1, **caractérisée en ce que** les colorants du composant d) peuvent être utilisés par rapport au composant individuel en question en quantités de 0,00001 % en poids à 0,30000 % en poids.

11. Composition selon la revendication 1, **caractérisée en ce que** la composition contient d'autres additifs du groupe constitué par les absorbeurs UV, les démoulants, les stabilisateurs thermiques et d'usinage.

12. Utilisation d'une composition selon la revendication 1 pour la fabrication de vitrages automobiles et de bâtiments.

13. Vitre automobile ou vitre de bâtiment fabriquée à partir d'une composition polymère selon l'une quelconque des revendications 1 à 11.

14. Vitre automobile ou vitre de bâtiment selon la revendication 13, **caractérisée en ce que** celle-ci comprend un revêtement résistant aux éraflures contenant un absorbeur UV.

15. Vitre automobile ou vitre de bâtiment selon la revendication 13 ou 14, **caractérisée en ce que** la vitre est une vitre en polycarbonate et la modification de la valeur de couleur E après 3 000 h de vieillissement artificiel par éclairage au xénon à 0,75 W est inférieure à 5,0.
